# EUROPEAN PATENT APPLICATION

(11) **EP 4 394 318 A1**
(43) Date of publication of application: **03.07.2024**
(21) Application number: 22217450.0
(22) Date of filing: 31.12.2022
(51) Int. Cl.: G01C 15/00

(54) **REFLECTIVE TARGET**

(71) Applicant: Hilti Aktiengesellschaft, 9494 Schaan (LI)
(72) Inventor: Winter, Andreas, 6800 Feldkirch (AT)
(74) Representative: Hilti Aktiengesellschaft Corporate Intellectual Property

(57) **Abstract**

Reflective target (110) configured to be used in measuring and surveying applications, comprising a base element (111) having a central axis (112), and a first prism section (113) including a plurality of first corner cube prisms (114) having light entrance surfaces, wherein the first corner cube prisms (114) are arranged around the central axis (112) in a circumferential direction (115) and configured to reflect light beams of a range of wavelengths. The target (110) further comprises a first cat-eye section (116) including a plurality of first cat-eyes (117) arranged around the central axis (112) in the circumferential direction (115), wherein the first cat-eyes (117) are configured to reflect light beams of a first range of wavelengths and formed by a plurality of first prism elements having first light entrance surfaces.

## Description

The present invention relates to a reflective target according to the definition of claim 1.

### Background of the invention

Reflective targets are widely used in measuring and surveying applications, such as in the construction sector. A reflective target may be applied to a landmark or a position of interest and aimed at using a laser instrument, such as a theodolite or robotic total station, having a light emitting element for emitting light such as laser light along an optical axis towards the reflective target. The laser instrument includes an optical arrangement for receiving the reflected light from the reflective target. Based on the reflected light the laser instrument may be accurately oriented towards the target.

US 6,185,055 B1 discloses a known reflective target configured to be used in measuring and surveying applications. The target comprises a base element having a central axis, and a prism section including a plurality of corner cube prisms. The corner cube prisms are arranged around the central axis in a circumferential direction and configured to reflect light beams of a range of wavelengths. The disadvantage of the reflective target known from US 6,185,055 B1 is that an identification of the target during tracking is not supported.

### Summary of the invention

Therefore, what is desired is a reflective target that supports the identification of the target during tracking. What is also desired is to support the identification of a passive target.

These objects are achieved by realizing the features of the independent claim. Features which further develop the invention in an advantageous manner are described in the dependent claims.

According to an aspect of the present invention, there is provided a reflective target configured to be used in measuring and surveying applications. The target further comprises a first cat-eye section including a plurality of first cat-eyes arranged around the central axis in the circumferential direction, wherein the first cat-eyes are configured to reflect light beams of a first range of wavelengths and formed by a plurality of first prism elements having first light entrance surfaces.

The target according to the invention comprises a first prism section including a plurality of first corner cube prisms and a first cat-eye section including a plurality of first cat-eyes. The optical properties of the first prism section differ from the first cat-eye section. The first cat-eye section supports the identification of the target during tracking.

Preferably, the target further comprises a second cat-eye section including a plurality of second cat-eyes arranged around the central axis in the circumferential direction, wherein the second cat-eyes are configured to reflect light beams of a second range of wavelengths and formed by a plurality of second prism elements having second light entrance surfaces, wherein the first cat-eye section is arranged at a first height level of the target and the second cat-eye section is arranged at a second height level of the target, the second height level being different from the first height level. By using a target that includes a first cat-eye section with a plurality of first cat-eyes and a second cat-eye section with a plurality of second cat-eyes, the target can be easily distinguished during tracking from reflecting surfaces or other targets.

Preferably, the target further comprises a foil section including a reflective foil arranged around the central axis in the circumferential direction, the reflective foil being configured to reflect light beams of a further range of wavelengths and formed by a plurality of further prism elements having further light entrance surfaces. The foil section with the reflective foil supports measuring of distances between a laser instrument and the target.

Preferably, the foil section is arranged between the first cat-eye section and the second cat-eye section. By using a target that includes a first cat-eye section with a plurality of first cat-eyes, a second cat-eye section with a plurality of second cat-eyes, and a foil section between the first and second cat-eye sections, the target can be easily distinguished during tracking from reflecting surfaces or other targets.

Preferably, the target further comprises a second prism section including a plurality of second corner cube prisms having second light entrance surfaces, wherein the second corner cube prisms are arranged around the central axis in the circumferential direction and configured to reflect light beams of the range of wavelengths.

Preferably, the first prism section is arranged at a first height level of the target and the second prism section is arranged at a second height level of the target, the second height level being different from the first height level.

In a preferred version, the first cat-eyes and/or the second cat-eyes are formed as planar cat-eyes.

Preferably, the first cat-eyes are formed as planar cat-eyes and the corner cube prisms of the first prism section are arranged in the planar first cat-eyes in such a way that the light entrance surfaces are parallel to the first cat-eyes.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: shows a system for measuring and surveying comprising a reflective target according to the present invention, a laser instrument, and a supervisory device, which is integrated in a remote controller,
- FIGS. 2A, B: show an exemplary version of the laser instrument used in the system of FIG. 1 (FIG. 2A) and a block diagram of the main components of the laser instrument as illustrated in FIG. 2A (FIG. 2B),
- FIGS. 3A, B: show an exemplary version of the remote controller used in the system of FIG. 1 (FIG. 3A) and a block diagram of the main components of the remote controller as illustrated in FIG. 3A (FIG. 3B),
- FIG. 4: shows a first exemplary version of a reflective target according to the present invention comprising a first and second prism section, a first and second cateye section, and a foil section,
- FIG. 5: shows a second exemplary version of a reflective target according to the present invention comprising a first prism section, a first cat-eye section, and a foil section.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings.

The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms. The indefinite articles "a" and "an", as used herein in the specification and in the claims, unless clearly indicated to the contrary, should be understood to mean "at least one". The phrase "and/or", as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

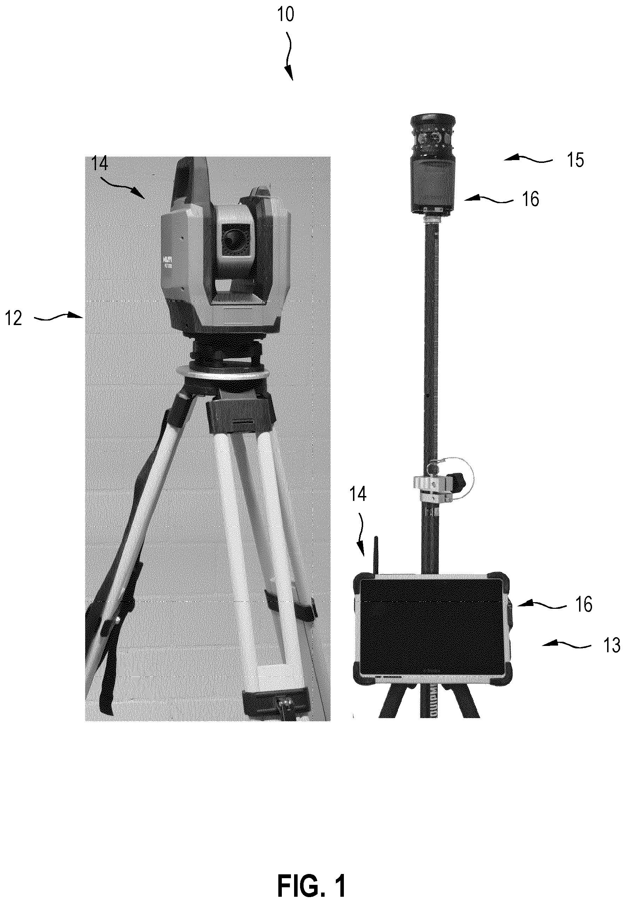

**FIG.** 1 schematically illustrates a typical measuring and surveying application in the construction sector as an example of a system **10** for measuring and surveying applications in a worksite environment **11**, in which the laser instrument is positioned. The system 10 comprises a laser instrument **12** having distance and angle measuring functionality, a remote controller **13** that is connected via a first communication link **14** to the laser instrument 12, and a reflective target **15** that is connected via a second communication link **16** to the remote controller 13.

Typically, the communications via the first communication link 14 between the laser instrument 12 and remote controller 13 and via the second communication link 16 between the target 15 and remote controller 13 are wireless, such as using WiFi format or Bluetooth format. In FIG. 1, the first communication link 14 and second communication link 16 are depicted as wireless link, although it certainly could be constructed by use of an electrical cable, an optical cable, or any other type of suitable cable.

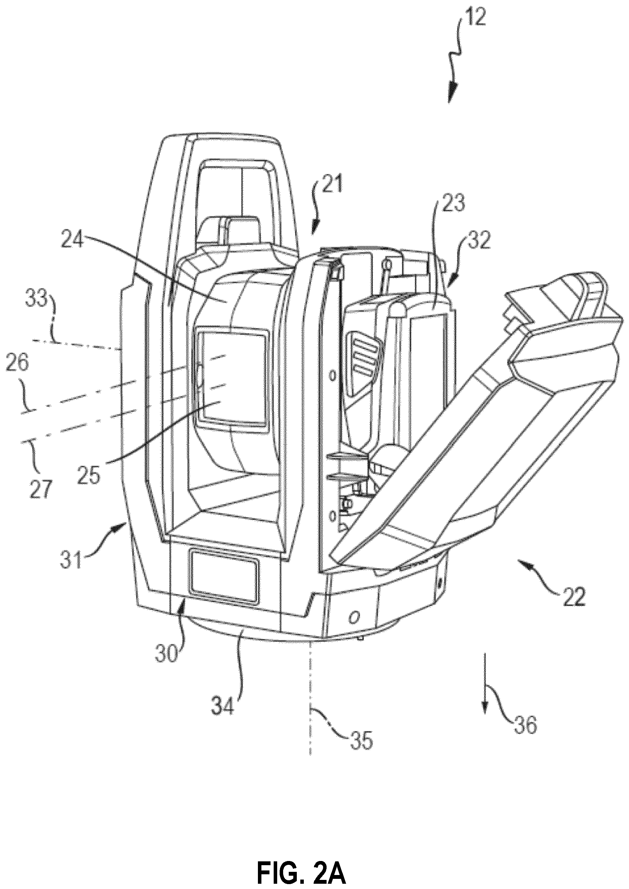

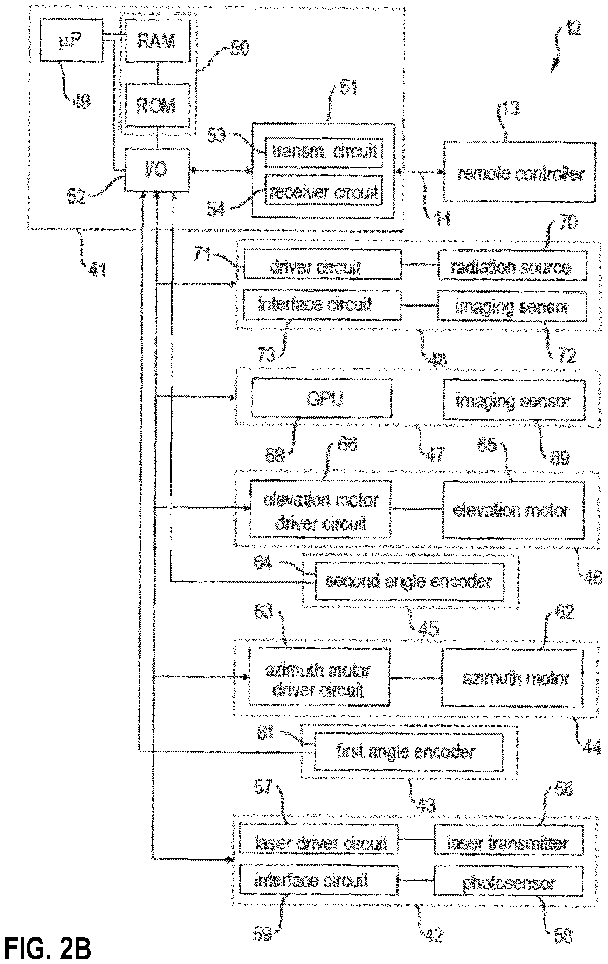

**FIGS. 2A****, B** show an exemplary version of the laser instrument 12 used in the system 10 of FIG. 1 in a perspective view (FIG. 2A) and a block diagram of the main components of the laser instrument 12 as illustrated in FIG. 2A (FIG. 2B).

The laser instrument 12 is designed as robotic total station and comprises a measuring head **21**, a main housing **22**, and a battery pack **23** configured to power the laser instrument 12. The measuring head 21 is enclosed by a housing **24**, which includes an exit window **25**. In the housing 24, a distance measuring device that emits a laser beam **26** and a tracking device that emits optical radiation **27** are arranged. The laser beam 26 and the optical radiation 27 are emitted through the exit window 25 to leave the housing 24.

The laser beam 26 is also called first light beam, and the optical radiation 27 is also called second light beam. The first light beam 26 is within a first range of wavelengths and has a first angle of aperture, and the second light beam 27 is within a second range of wavelengths and has a second angle of aperture.

The main housing 22 is U-formed and includes a bottom portion **30**, a first side portion **31**, and a second side portion **32**. The measuring head 21 is pivotably mounted to the main housing 22 about a pivoting axis **33** and is arranged between the first side portion 31 and the second side portion 32. The main housing 22 can rotate completely around its circumference at a full 360° angle with respect to a disc **34** about a rotating axis **35**.

An azimuth motor device and a first angle measuring device are located in the bottom portion 30 of the main housing 22 and allow to rotate the laser instrument 12 about the rotating axis 35 and to determine the direction of the laser beam 26 in a horizontal plane perpendicular to a local direction of gravitation **36**. An elevation motor device and a second angle measuring device are located in the first side portion 31 of the main housing 22 and allow the measuring head 21 to pivot about the pivoting axis 33 and to determine the direction of the laser beam 26 in a vertical plane parallel to the local direction of gravitation 36. To make the laser instrument 12 fully automatic, it is preferred to include a self-leveling device, which may be arranged in the bottom portion 30 of the main housing 22.

FIG. 2B shows a block diagram of the main components of the laser instrument 12. The laser instrument 12 may include a first electronic device **41**, a distance measuring device **42**, a first angle measuring device **43** configured to measure the orientation of the laser beam in the horizontal plane (horizontal angle), an azimuth motor device **44**, a second angle measuring device **45** configured to measure the orientation of the laser beam in the vertical plane (vertical angle), an elevation motor device **46**, an overview camera device **47**, and a tracking device **48** configured to track a target via the laser instrument 12.

The laser instrument 12 shown in FIG. 2A is a robotic total station. A total station is called robotic if it is able automatically to follow a target through the worksite environment. To allow following of a target, a robotic total station comes equipped with the azimuth and elevation motor devices 44, 46 for automatically rotating the laser instrument horizontally and vertically, and the tracking device 48 for tracking the target.

The first electronic device 41 comprises a first processing circuit (µP) **49**, a first memory circuit **50** that may include associated random-access memory (RAM) and read only memory (ROM), a first communications circuit **51**, and a first input/output (I/O) interface circuit **52**. The first processing circuit 49, also called device control unit, may communicate with the first memory circuit 50 and first communications circuit 51 and is configured to control the laser instrument 12. The first communications circuit 51 includes a first transmitter circuit **53** and a first receiver circuit **54** and is configured to be connected to a communications circuit of the remote controller via the communication link. The first input/output interface circuit 52 is an interface between the first processing circuit 49 and the various types of motor driver circuits and sensor circuits of the laser instrument 12.

The distance measuring device 42 includes a laser transmitter **56**, a laser driver circuit **57**, a photosensor **58**, and a laser receiver interface circuit **59**. The laser driver circuit 57 provides current for the laser transmitter 56 which emits the laser beam 26. The photosensor 58 receives at least a part of the laser beam 26 reflected at a target or a surface of the worksite environment, and the current signal that is outputted by the photosensor 58 is directed to the laser receiver interface circuit 59. After appropriate amplification and demodulation, the signal is sent via the first input/output interface circuit 52 to the first processing circuit 49.

The first angle measuring device 43 includes a first angle encoder **61**, which will provide input signals to the first processing circuit 49, so that it knows exactly in which horizontal angle the laser transmitter 56 is arranged in the horizontal plane; the output signal of the first angle encoder 61 is directed to the first input/output interface circuit 52. The azimuth motor device 44 includes an azimuth motor **62**, which is the motive force to rotate the main housing 22 of the laser instrument 12 about the first rotating axis 32, and an azimuth motor driver circuit **63**, which will provide the proper current and voltage to drive the azimuth motor 62.

The second angle measuring device 45 includes a second angle encoder **64**, which will provide input signals to the first processing circuit 49, so that it knows exactly in which vertical angle the laser transmitter 56 is arranged in the vertical plane; the output signal of the second angle encoder 64 is directed to the first input/output interface circuit 52. The elevation motor device 46 includes an elevation motor **65,** which is the motive force to pivot the measuring head 21 about the first pivoting axis 30, and an elevation motor driver circuit **66**, which will provide the proper current and voltage to drive the elevation motor 65.

The overview camera device 47 may be arranged in the measuring head 21 of the laser instrument 12 for capturing an image or a video feed generally in the direction of a sighting axis of the laser instrument 12. The overview camera device 47 may include optical elements, such as, but not limited to, an objective and a focusing lens, a graphics processing unit (GPU) **68**, and a first imaging sensor **69**, which may comprise or be constituted by a CCD-based sensor, an active pixel-sensor, a CMOS-based sensor, and/or by any other type of suitable imaging sensors.

The tracking device 48 includes an optical radiation source **70**, such as, but not limited to, an infrared (IR) transmitter or a visible light transmitter, a driver circuit **71**, a second imaging sensor **72**, and a receiver interface circuit **73**. The driver circuit 71 provides current for the optical radiation source 70 which emits optical radiation, such as, but not limited to, infrared radiation or visible radiation. The second imaging sensor 72 receives at least a part of the optical radiation reflected at a target, and the current signal that is outputted by the second imaging sensor 72 is directed to the receiver interface circuit 73. After appropriate amplification and processing, the signal is sent via the first input/output interface circuit 52 to the first processing circuit 49 for further processing and/or analyzing. The optical radiation source 70 may be configured to emit modulated optical radiation in accordance with characteristics, such as, but not limited to, a frequency.

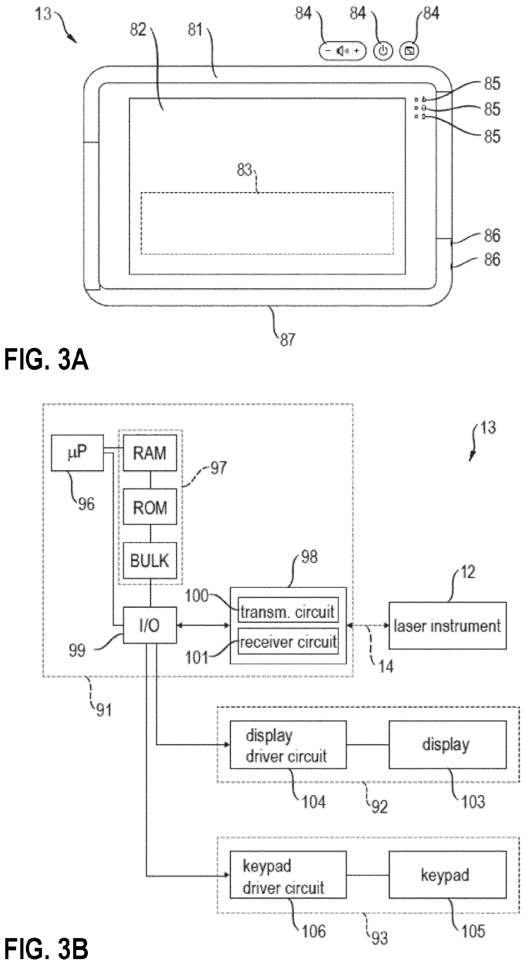

**FIGS. 3A****, B** show an exemplary version of the remote controller 13 used in the system 10 of FIG. 1 in a front view (FIG. 3A) and a block diagram of the main components of the remote controller 13 as illustrated in FIG. 3A (FIG. 3B).

The remote controller 13 is designed as tablet computer and includes a housing **81**, a touch screen display **82**, a battery **83**, a set of buttons **84**, e.g., volume control button, power on/off button, and display control button, a set of indicators **85**, e.g., for operating status, data storage status, and battery status, a set of connectors **86**, e.g., for docking, data storage, and USB, and a card slot **87**.

FIG. 3B shows a block diagram of the main components of the remote controller 13. The remote controller 13 may include a second electronic device **91**, a display device **92**, and an input device **93**.

The second electronic device 91 comprises a second processing circuit (µP) **96**, a second memory circuit **97** that may include associated random-access memory (RAM), read only memory (ROM), and some type of bulk memory (BULK), a second communications circuit **98,** and a second input/output (I/O) interface circuit **99**. The second processing circuit 96 may communicate with the second memory circuit 97 and second communications circuit 98 and is configured to control the remote controller 13. The second communications circuit 98 includes a second transmitter circuit **100** and a second receiver circuit **101** and is configured to be connected to the first communications circuit 51 of the laser instrument 12 via the communication link 14. The second input/output interface circuit 99 is an interface between the second processing circuit 96 and the various driver circuits of the remote controller 13.

In the second memory circuit 97 several program codes having computer-executable instructions for performing a method may be stored. The stored program codes may include a program code for performing a method for tracking a reflective target or for identifying a reflective target. The methods maybe performed by a supervisory device of the system 10, the supervisory device having evaluation, data processing and control functionality. In the system 10, the supervisory device is integrated into the second processing circuit 96 of the second electronic device 91 of the remote controller 13. Alternatively, the supervisory device maybe integrated into the first processing circuit 49, or into the first and second processing circuits 49, 96, or in any other type of suitable processing circuit.

The display device 92 includes a display **103** and a display driver circuit **104**. The display driver circuit will be in communication with the second I/O interface circuit 99 and provides the correct interface and data signals for the display 103. If the remote controller 13 is a laptop computer, for example, then this would be the standard display seen in most laptop computers. Or, if the remote controller 13 is a tablet computer or a smart phone, in which case the display device is a much smaller physical device, the display device 103 could be a touch screen display.

The user-operated input device 93 includes a keypad **105** and a keypad driver circuit **106**. The keypad driver circuit will be in communication with the second I/O interface circuit 99 and controls the signals that interface to the keypad 105. If the display device 103 is a touch screen display, then there may not be a separate keypad on the remote controller 13, because most of the command or data to input functions will be available by touching the display itself and the keypad is integrated in the touch screen display. There may be some type of power on/off button, but that would not necessarily be considered a true keypad and typically would not be used for entering data.

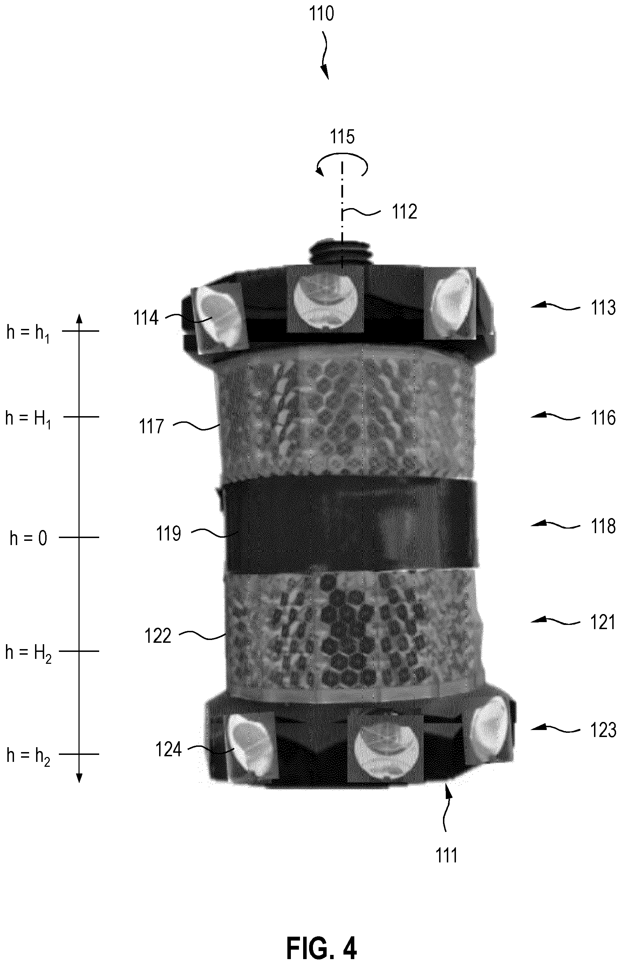

**FIG. 4** shows a first exemplary version of a reflective target **110** according to the present invention, the reflective target 110 being configured to be used in measuring and surveying applications.

The target 110 comprises a base element **111** having a central axis **112**, a first prism section **113** including a plurality of first corner cube prisms **114** arranged around the central axis 112 in a circumferential direction **115**, and a first cat-eye section **116** including a plurality of first cat-eyes **117** formed by a plurality of first prism elements having first light entrance surfaces, the first cat-eyes being arranged around the central axis 112 in the circumferential direction 115. The first corner cube prisms 114 are configured to reflect light beams of a range of wavelengths, and the first cat-eyes 117 are configured to reflect light beams of a first range of wavelengths.

In the exemplary version shown in FIG. 4, the target 110 further comprises a foil section **118** including a reflective foil **119** arranged around the central axis 112 in the circumferential direction 115, a second cat-eye section **121** including a plurality of second cat-eyes **122** formed by a plurality of second prism elements having second light entrance surfaces, and a second prism section **123** including a plurality of second corner cube prisms **124**.

The first corner cube prisms 114 and second corner cube prisms 124 are configured to reflect light beams of a range of wavelengths, the first cat-eyes 117 are configured to reflect light beams of a first range of wavelengths, the second cat-eyes 122 are configured to reflect light beams of a second range of wavelengths, and the retroreflective foil 119 is configured to reflect light beams of a further range of wavelengths.

The first cat-eye section 116 is arranged at a first height level **H₁** of the target 110 and the second cat-eye section 121 is arranged at a second height level **H₂** of the target 110, wherein the second height level H₂ is different from the first height level H₁. In the exemplary version shown in FIG. 4, the foil section 118 is arranged between the first cat-eye section 116 and the second cat-eye section 121. The target 110 that includes the first cat-eye section 116 with the plurality of first cat-eyes 117, the second cat-eye section 121 with the plurality of second cat-eyes 122, and a foil section 118 between the first and second cat-eye sections 116, 121 can be easily distinguished during tracking from reflecting surfaces or other targets.

The first prisms 114, the first cat-eyes 117, and the reflective foil 119 differ in their optical properties. The reflective foil 119 and the cat-eyes 119 are composed of multiple prisms arranged next to each other. A cat-eye is a target having a planar reflective section that includes a plurality of prisms, each prism is constituted by a corner cube having three surfaces oriented perpendicular to one another and each prism is oriented such that a common edge formed by two of the three surfaces is in the same plane as the target axis.

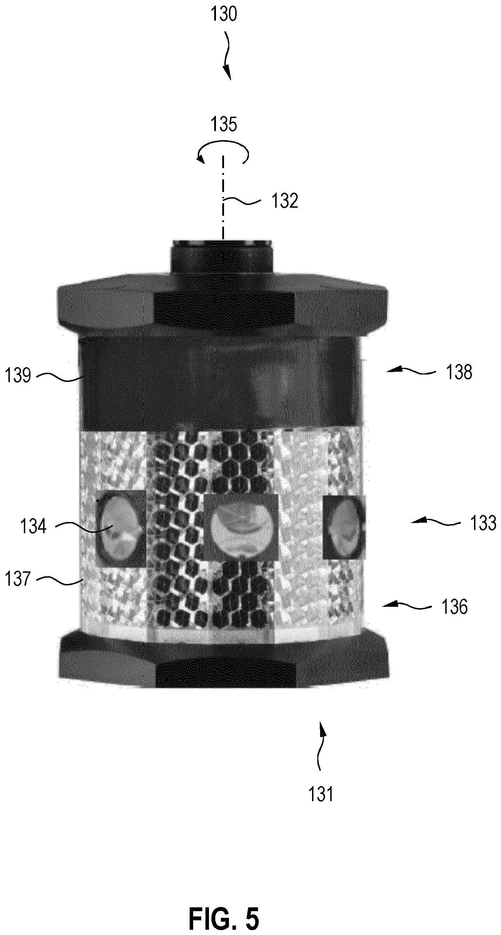

**FIG. 5** shows a second exemplary version of a reflective target **130** according to the present invention, the reflective target 130 being configured to be used in measuring and surveying applications.

The target 130 comprises a base element **131** having a central axis **132**, a first prism section **133** including a plurality of first corner cube prisms **134** arranged around the central axis 132 in a circumferential direction **135**, and a first cat-eye section **136** including a plurality of first cat-eyes **137** formed by a plurality of first prism elements having first light entrance surfaces, the first cat-eyes 137 being arranged around the central axis 132 in the circumferential direction 135. The first corner cube prisms 134 are configured to reflect light beams of a range of wavelengths, and the first cat-eyes 137 are configured to reflect light beams of a first range of wavelengths.

In the exemplary version shown in FIG. 5, the target 130 further comprises a foil section **138** including a reflective foil **139** arranged around the central axis 132 in the circumferential direction 135. The reflective foil 139 is cylindrically formed with a circular cross-section; alternatively, the cross-section of the reflective foil 139 may be formed as hexagon, octagon, or any other type of polygon.

## Claims

1. A reflective target (15; 110; 130) configured to be used in measuring and surveying applications, comprising:
▪ a base element (111; 131) having a central axis (112; 132), and
▪ a first prism section (113; 133) including a plurality of first corner cube prisms (114; 134) having light entrance surfaces, wherein the first corner cube prisms (114; 134) are arranged around the central axis (112; 132) in a circumferential direction (115; 135) and configured to reflect light beams of a range of wavelengths,
**characterized in that** the target (110; 130) further comprises a first cat-eye section (116; 136) including a plurality of first cat-eyes (117; 137) arranged around the central axis (112; 132) in the circumferential direction (115; 135), wherein the first cat-eyes (117; 137) are configured to reflect light beams of a first range of wavelengths and formed by a plurality of first prism elements having first light entrance surfaces.

2. The target according to claim 1, further comprising a second cat-eye section (121) including a plurality of second cat-eyes (122) arranged around the central axis (112) in the circumferential direction (115), wherein the second cat-eyes (122) are configured to reflect light beams of a second range of wavelengths and formed by a plurality of second prism elements having second light entrance surfaces, wherein the first cat-eye section (116) is arranged at a first height level (H₁) of the target (110) and the second cat-eye section (121) is arranged at a second height level (H₂) of the target (110), the second height level (H₂) being different from the first height level (H₁).

3. The target according to any of claims 1 to 2, further comprising a foil section (118; 138) including a reflective foil (119; 139) arranged around the central axis (112; 132) in the circumferential direction (115; 135), the reflective foil (119; 139) being configured to reflect light beams of a further range of wavelengths and formed by a plurality of further prism elements having further light entrance surfaces.

4. The target according to claim 3, wherein the foil section (118) is arranged between the first cat-eye section (116) and the second cat-eye section (121).

5. The target according to any of claims 1 to 4, further comprising a second prism section (123) including a second plurality of corner cube prisms (124) having light entrance surfaces, wherein the second corner cube prisms (124) are arranged around the central axis (112) in the circumferential direction (115) and configured to reflect light beams of the range of wavelengths.

6. The target according to claim 5, wherein the first prism section (113) is arranged at a first height level (h₁) of the target (110) and the second prism section (123) is arranged at a second height level (h₂) of the target (110), the second height level (h₂) being different from the first height level (h₁).

7. The target according to any of claims 1 to 6, wherein the first cat-eyes (117; 137) and/or the second cat-eyes (122; 132) are formed as planar cat-eyes.

8. The target according to claim 1, wherein the first cat-eyes (137) are formed as planar cat-eyes and the first corner cube prisms (134) of the first prism section (133) are arranged in the planar first cat-eyes (137) in such a way that the light entrance surfaces are parallel to the first cat-eyes (137).
